# EUROPEAN PATENT SPECIFICATION

(11) **EP 1 175 457 B1**
(45) Date of publication and mention of the grant of the patent: **25.06.2003**
(21) Application number: 00921185.5
(22) Date of filing: 20.04.2000
(51) Int. Cl.: C08J 5/22, B01D 69/12, H01M 8/02

(54) **PROCESS FOR THE PRODUCTION OF A COMPOSITE MEMBRANE**
VERFAHREN ZUR HERSTELLUNG EINER KOMPOSITMEMBRANE
PROCEDE DE PRODUCTION D'UNE MEMBRANE COMPOSITE

(30) Priority: 21.04.1999 NL 1011855
(43) Date of publication of application: 30.01.2002
(73) Proprietor: DSM N.V., 6411 TE Heerlen (NL)
(72) Inventor: STEENBAKKERS, Edwin, Henricus, Adriaan, NL-6129 CW Urmond (NL)
(74) Representative: Mooij, Johannes Jacobus
(86) International application number: NL0000257
(87) International publication number: WO00078850

(56) References cited:
- WO-A-98/20063
- US-A- 5 635 041
- DATABASE WPI Section Ch, Week 199509 Derwent Publications Ltd., London, GB; Class A85, AN 1995-064423 XP002125577 & JP 06 342667 A (ASAHI KASEI KOGYO KK), 13 December 1994 (1994-12-13)

## Description

The invention relates to a process for the production of a composite membrane comprising a porous film of a first polymer, the pores of which contain a second polymer. The invention relates in particular to a process for the production of a composite membrane suitable for use in a fuel cell.

Such a process is known from WO 98/20063, in which it is described that a composite membrane can be produced by dissolving an ion-conducting polymer in a solvent which contains at least 25 wt.% of a component having a boiling point higher than 125°C, applying the resulting solution onto a horizontal porous membrane, the quantity of the solution being chosen so that the volume of the ion-conducting polymer is more than 60% of the pore volume, and subsequently evaporating the solvent at a temperature of at least 80°C.

Such a process has the drawback that evaporating the solvent out of the membrane takes very much time.

The object of the invention is to provide a process in which said drawback is not present or only to a lesser extent.

This object is achieved according to the invention by depositing the second polymer, from a solution, in the pores of the first polymer, characterised in that the film of the first polymer is contacted with the surface of a first electrode which, together with at least one counterelectrode, is present in the solution of the second polymer and with such a potential difference being applied across the first electrode and the counterelectrode that the second polymer moves towards the first electrode in which process it must pass the film.

In this way it is achieved that the second polymer is deposited in the pores of the porous film, so that the pores are filled completely and a composite membrane is formed.

The process according to the invention is suitable in particular for the production of a composite membrane from a film of a thickness of between 30 and 50 µm and with high air permeability or, in other words, a low Gurley value.

An advantage of the process according to the invention is that the formed composite membrane is gastight. This makes it suitable for use in a fuel cell.

A further advantage of the process is that it can be carried out easier in a continuous mode of operation than the known process.

Another process for the production of a composite membrane is disclosed in US-A-5,635,041. The composite membrane in this document comprises an expanded polytetrafluoroethylene membrane having a porous microstructure of polymeric fibrils and an ion exchange material impregnated throughout the membrane, wherein the ion exchange material substantially impregnates the membrane as to render an interior volume of the membrane substantially occlusive. Optionally the composite membrane may be reinforced with a woven or non-woven material. To prepare an integral composite membrane according to US-A-5,635,041, a support structure, such as polypropylene woven fabric, may first be laminated to an untreated polytetrafluoroethylene base material by any conventional technique. A solution is prepared containing an ion exchange material in solvent mixed with one or more surfactants. The solution may be applied to the base material by any conventional coating technique including forwarding roll coating, reverse roll coating, gravure coating, doctor coating, kiss coating, as well as dipping, brushing, painting, and spraying so long as the liquid solution is able to penetrate the interstices and interior volume of the base material. Excess solution from the surface of the membrane may be removed. The treated membrane is then immediately placed in an oven to dry. Drying the treated membrane in the oven causes the ion exchange resin to become securely adhered to both the external and internal membrane surfaces, i.e. the fibrils and/or nodes of the base material.

Suitable electrodes for the process according to the invention are carbon, noble metals or compositions thereof, such as Pd, Pt and histalloy or doped ceramic materials. It is also possible for the counterelectrode to be made of the second polymer; this ensures that the concentration of the second polymer in the solution remains practically constant.

A suitable porous film of a first polymer may be for example a porous polyalkene film. Preferably the polyalkene film applied in the process is stretched in at least one direction. In this way, a high-strength film is obtained.
Polyalkene membranes that are stretched in at least one direction are disclosed in EP-A-504,954. EP-A-504,954 describes a process for preparing a polyalkene film from a solution of a polyalkene in a volatile solvent. The film is passed through a cooling bath containing a liquid coolant and the solvent is removed at a temperature below the temperature at which the polyalkene dissolves in the solvent, whereupon the film is stretched in at least one direction. If the polyalkene is polyethylene, the weight-average molecular weight may vary between 100,000 and 5,000,000 g/mole. The film preferably contains polyethylene with a weight-average molecular weight of less than 500,000 g/mole. It has been found that membranes with a mean pore size of between 0.1 and 5.0 µm can readily be produced in the presence of polyethylene having such a molecular weight. Particularly suitable are blends of polyethylenes having different molecular weights. A blend containing for example polyethylene with a weight-average molecular weight of less than 500,000 g/mole may also contain polyethylene with a weight-average molecular weight higher than 1,000,000 g/mole. Due to the presence of the latter polyethylene a high-strength film is obtained and the film can be stretched so that a Gurley value of less than 1 s/50 cm³, measured to ASTM Standard D726-58, can be obtained. A film with a Gurley value of less than 0.01 s/50cm³ generally has inadequate strength for use in a fuel cell.

According to the invention the porous film is contacted with a first of two electrodes. This can be effected for instance by passing the film along the electrode surface.

As the second polymer can be used polymers which contain charged groups (polyelectrolytes). The second polymer preferably is a proton-conducting polymer on the basis of perfluorosulphonic acid and the solvent preferably contains water, one or more alcohols from the group of cyclohexanol, pentanol, 1-propanol, 1,2-ethene diol, or a mixture of these solvents. More preferably the solvent contains a mixture of water and propanol. This will ensure that if the membrane has been incorporated in a fuel cell, a current density of at least 1 A/cm² can be achieved at a cell voltage of 0.4 V.

In general the cell voltage needed to bring about depositing of the second polymer in the porous film is between 5 and 100 V. The distance between the electrodes is in general between 0.5 and 5 cm.

In the case that water is present in the solvent, generation of gas can occur at the electrodes, in addition to electrophoresis of the second polymer. As the generation of gases can have a negative effect on the deposition of the second polymer in the porous film, the gas that is generated has to be removed. Methods for adequate removal of the generated gas are known from the literature. The gas can be removed adequately for instance by regularly reversing the polarity of the potential difference across the electrodes for a short while or by applying a square-wave voltage.

The invention also relates to the use in a fuel cell of a composite membrane obtained according to the invention.

The invention will be elucidated by means of an example without being restricted thereto.

### Example I

In a 5% solution of a proton-conducting polymer on the basis of perfluorosulphonic acid (Nafion®), the solvent of which consists of a 95/5 (wt/wt) propanol/water mixture, a porous polyethylene film having a porosity of 80 vol.%, a mean pore size of 1.5 µm and a thickness of 30 µm is passed along a first electrode at a speed of 20 mm/min, the contact surface between the film and the first electrode (anode) amounting to 150 cm². A counterelectrode (cathode) has been placed at a distance of 0.5 cm from the first electrode and the voltage applied is 50 V. The pores in the part of the film that had been passed along the electrode appeared to be filled with Nafion.

## Claims

1. Process for the production of a composite membrane comprising a porous film of a first polymer, the pores of which contain a second polymer, by depositing the second polymer from a solution in the pores of the first polymer, **characterised in that** the film of the first polymer is contacted with the surface of a first electrode which, together with at least one counterelectrode, is present in the solution of the second polymer and with such a potential difference being applied across the first electrode and the counterelectrode that the second polymer moves towards the first electrode, in which process it must pass the film.

2. Process according to Claim 1, wherein the counterelectrode contains the second polymer.

3. Process according to Claim 1 or 2, wherein the second polymer is a proton-conducting polymer on the basis of perfluorosulphonic acid and the solvent contains water, one or more alcohols or a mixture of these.

4. Process according to Claim 3, wherein the solvent contains a mixture of water and propanol.

5. Process according to any one of Claims 1-4, wherein the applied potential difference amounts to 5 - 100 V.

6. Process according to any one of Claims 1-5, wherein the distance between the electrodes is 0.5 - 5 cm.

7. Use in a fuel cell of a composite membrane produced according to Claims 1 - 6.

## Patentansprüche

1. Verfahren für die Herstellung einer Verbundmembran, welche einen porösen Film eines ersten Polymers umfasst, dessen Poren ein zweites Polymer enthalten, durch Abscheiden des zweiten Polymers aus einer Lösung in die Poren des ersten Polymers, **dadurch gekennzeichnet, dass** der Film des ersten Polymers mit der Oberfläche einer ersten Elektrode kontaktiert wird, welche, zusammen mit wenigstens einer Gegenelektrode, in der Lösung des zweiten Polymers vorhanden ist und wobei eine derartige Potentialdifferenz über die erste Elektrode und die Gegenelektrode angelegt wird, dass das zweite Polymer sich zur ersten Elektrode bewegt, bei welchem Vorgang es den Film passieren muss.

2. Verfahren gemäß Anspruch 1, wobei die Gegenelektrode das zweite Polymer enthält.

3. Verfahren gemäß Anspruch 1 oder 2, wobei das zweite Polymer ein Protonen-leitendes Polymer auf der Basis von Perfluorsulfonsäure ist und das Lösungsmittel Wasser, einen oder mehrere Alkohole oder ein Gemisch aus diesen enthält.

4. Verfahren gemäß Anspruch 3, wobei das Lösungsmittel ein Gemisch aus Wasser und Propanol enthält.

5. Verfahren gemäß einem der Ansprüche 1-4, wobei sich die angelegte Potentialdifferenz auf 5-100 V beläuft.

6. Verfahren gemäß einem der Ansprüche 1-5, wobei die Entfernung zwischen den Elektroden 0,5-5 cm beträgt.

7. Verwendung einer Verbundmembran hergestellt gemäß Ansprüche 1-6 in einer Brennstoffzelle.

## Revendications

1. Procédé pour la production d'une membrane composite comprenant un film poreux d'un premier polymère, dont les pores contiennent un second polymère, en déposant le second polymère à partir d'une solution dans les pores du premier polymère, **caractérisé en ce que** le film du premier polymère est en contact avec la surface d'une première électrode qui, avec au moins une contre électrode, est présente dans la solution du second polymère et avec une telle différence de potentiel appliquée sur la première électrode et la contre électrode, que le second polymère se déplace vers la première électrode, dont il doit dépasser le film dans ce procédé.

2. Procédé selon la revendication 1, dans lequel la contre électrode contient le second polymère.

3. Procédé selon la revendication 1 ou 2, dans lequel le second polymère est un polymère conducteur de protons à base d'acide perfluorosulfonique et le solvant contient de l'eau, un ou plusieurs alcools ou un mélange de ceux-ci.

4. Procédé selon la revendication 3, dans lequel le solvant contient un mélange d'eau et d'alcool isopropylique.

5. Procédé selon l'une quelconque des revendications 1 - 4, dans lequel la différence de potentiel appliquée s'élève à 5 - 100 V.

6. Procédé selon l'une quelconque des revendications 1 - 5, dans lequel la distance entre les électrodes est comprise entre 0,5 et 5 cm.

7. Utilisation dans une cellule de carburant d'une membrane composite produite selon les revendications 1 - 6.
